# EUROPÄISCHE PATENTSCHRIFT

(11) **EP 3 679 329 B1**
(45) Veröffentlichungstag und Bekanntmachung des Hinweises auf die Patenterteilung: **12.10.2022**
(21) Anmeldenummer: 18769946.7
(22) Anmeldetag: 21.08.2018
(51) Int. Cl.: G01D 5/14, G01D 5/244

(54) **VERFAHREN ZUR BESTIMMUNG DER POSITION, INSBESONDERE WINKELLAGE, UND ANORDNUNG ZUR DURCHFÜHRUNG DES VERFAHRENS**
METHOD FOR DETERMINING THE POSITION, IN PARTICULAR ANGULAR POSITION, AND ARRANGEMENT FOR CARRYING OUT THE METHOD
PROCÉDÉ DE DÉTERMINATION DE LA POSITION, NOTAMMENT DE LA POSITION ANGULAIRE ET DISPOSITIF POUR LA MISE EN OEUVRE DU PROCÉDÉ

(30) Priorität: 08.09.2017 DE 102017008434
(43) Veröffentlichungstag der Anmeldung: 15.07.2020
(73) Patentinhaber: SEW-EURODRIVE GmbH & Co. KG, 76646 Bruchsal (DE)
(72) Erfinder: HOFFMANN, Martin, 69117 Heidelberg (DE); NEUMANN, Eugen, 76646 Bruchsal (DE); AHL, Torsten, 76297 Stutensee (DE)
(86) Internationale Anmeldenummer: PCT/EP2018/025221
(87) Internationale Veröffentlichungsnummer: WO 2019/048083

(56) Entgegenhaltungen:
- DE-A1-102014 212 554
- DE-A1-102016 015 720
- DE-A1-102016 203 234
- US-A1- 2015 134 284

## Beschreibung

Die Erfindung betrifft ein Verfahren zur Bestimmung der Position, insbesondere Winkellage, und eine Anordnung, **die dazu eingerichtet ist, das Verfahren durchzuführen.**

Es ist aus dem Schulmathematik-Unterricht allgemein bekannt, dass eine Winkelstellung durch Angabe eines Wertes einer auf eine Hypotenuse normierten Ankathete, also Cosinuswertes, und Angabe eines Wertes einer auf die Hypotenuse normierten Gegenkathede, also Sinuswertes, eine Winkelstellung bestimmbar ist.

**Aus der** DE 10 2014 212 554 A1 **ist als nächstliegender Stand der Technik eine Diagnose eines Antriebssystems bekannt.**

**Aus der** DE 10 2016 203 234 A1 **ist ein Drehwinkelsensor bekannt.**

**Aus der** DE 10 2016 015 720 A1 **ist ebenfalls ein Drehwinkelsensor bekannt.**

**Aus der** US 2015/134 284 A1 **ist ein Verfahren zum Bestimmen eines Winkeoffsets zwischen Rotor und Stator einer Elektromaschine bekannt.**

Der Erfindung liegt daher die Aufgabe zugrunde, **ein** Verfahren zur Bestimmung einer Winkelstellung in robuster Weise weiterzubilden.

Erfindungsgemäß wird die Aufgabe bei dem Verfahre**n nach den in Anspruch 1 und bei der Anordnung nach den in Anspruch** 3 angegebenen Merkmalen gelöst.

Wichtige Merkmale der Erfindung bei dem Verfahren zur Bestimmung der Position, insbesondere Winkellage, eines relativ zu einer oder mehrerer Gruppen von Sensoren bewegbar, insbesondere rotatorisch oder linear bewegbar angeordneten, Teils sind, dass das Teil eine Maßverkörperung aufweist, welche von den Sensoren erfassbar ist, wobei mittels einer Transformation aus den von den Sensoren erzeugten Sensorsignalen zwei Signale erzeugt werden, welche zueinander 90° phasenverschoben sind, wobei die Position aus den Signalen Bestimmt wird,

Von Vorteil ist dabei, dass mittels der Transformation störende Oberwellenanteile unterdrückbar sind und der Winkel in einfacher Weise in den beiden Signalen, vorzugsweise ein Sinussignal und ein Cosinussignal in Abhängigkeit der Position, codierbar ist. Die Position ist entweder eine lineare Position, wenn das Teil linear beweglich relativ zu den Sensoren angeordnet ist oder eine Umfangswinkelposition, wenn das Teil drehbar angeordnet ist relativ zu den Sensoren. Das Erfassen der Maßverkörperung bewirkt die Sensorsignale.

Durch die Robustheit gegen Störungen und Einfachheit der Ausführung bewirkt das Verfahren ein schnelles und einfaches Bestimmen.

**Erfindungsgemäß** ist die Maßverkörperung durch Pole von einem oder mehreren Dauermagneten realisiert. Von Vorteil ist dabei, dass eine einfache Herstellung ausführbar ist.

Bei einer vorteilhaften Ausgestaltung sind die Sensoren einer jeweiligen Gruppe in Bewegungsrichtung regelmäßig voneinander beabstandet. Von Vorteil ist dabei, dass eine einfache Bestimmung ermöglicht ist und die Transformation mathematisch einfach darstellbar ist. insbesondere als Matrix mit konstanten Parametern.

**Erfindungsgemäß** werden die Signale vor der Bestimmung der Position mittels eines Korrekturverfahrens korrigiert. Von Vorteil ist dabei, dass durch Bildung des dritten Signals als jeweils aktueller Mittelwert der Sensorsignale ein Störsignal ermittelbar ist, so dass das erste Signal und das zweite Signal davon abhängig korrigiert werden. Beispielsweise liegt als Störfeld ein langsam ansteigendes, auf alle Sensoren gleichartig wirkendes Gleichfeld vor, so dass dessen auf das Sinussignal als erstes Signal und das Cosinussignal als zweites Signal verzerrend wirkende Wirkung korrigierbar ist, insbesondere zumindest rückwirkend.

**Erfindungsgemäß** ist die Transformation eine Clarke-Transformation,
**wobei die Gruppe derart ausgestaltet ist, dass drei Sensorsignale erzeugt werden.** Von Vorteil ist dabei, dass eine einfache Transformation verwendbar ist, wobei die Parameter der Matrix der Transformationsdarstellung konstante Werte sind, wobei jeweils betragsgleiche Parameter als Matrixelemente verwendbar sind.

**Erfindungsgemäß** wird bei der Transformation als drittes Signal die durch die Anzahl der Sensorsignale geteilte Summe der Sensorsignale bestimmt. Von Vorteil ist dabei, dass das Störsignal durch einfache Mittelwertbildung erkennbar ist.

**Erfindungsgemäß** wird aus dem Verlauf des dritten Signals ein Störsignal bestimmt, welches bei dem Korrekturverfahren verwendet wird zum Korrigieren der Signale. Von Vorteil ist dabei, dass das ermittelte Störsignal zum Korrigieren der Verläufe der Sensorsignale verwendbar ist.

**Von Vorteil ist bei der Anordung nach Anspruch** 3, dass eine einfache Herstellung der Anordnung ausführbar ist.

Weitere Vorteile ergeben sich aus den Unteransprüchen.

Die Erfindung wird nun anhand von schematischen Abbildungen näher erläutert:
In der Figur 1 ist das erfindungsgemäße Verfahren zur Bestimmung der Winkellage eines drehbar gelagerten Teils gezeigt.
In der Figur 2 ist eine erste Anordnung zur Erfassung von Sensorsignalen einer einzigen Gruppe von Sensoren gezeigt.
In der Figur 3 ist eine andere Anordnung zur Erfassung von Sensorsignalen zweier Gruppen von Sensoren gezeigt.

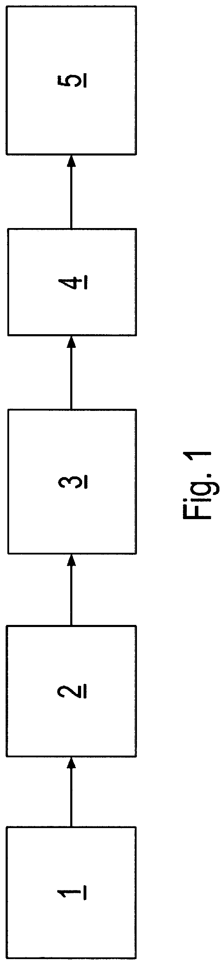

Wie in Figur 1 gezeigt, weist das beweglich, insbesondere drehbar, angeordnete Teil der Anordnung eine Maßverkörperung 1 auf.

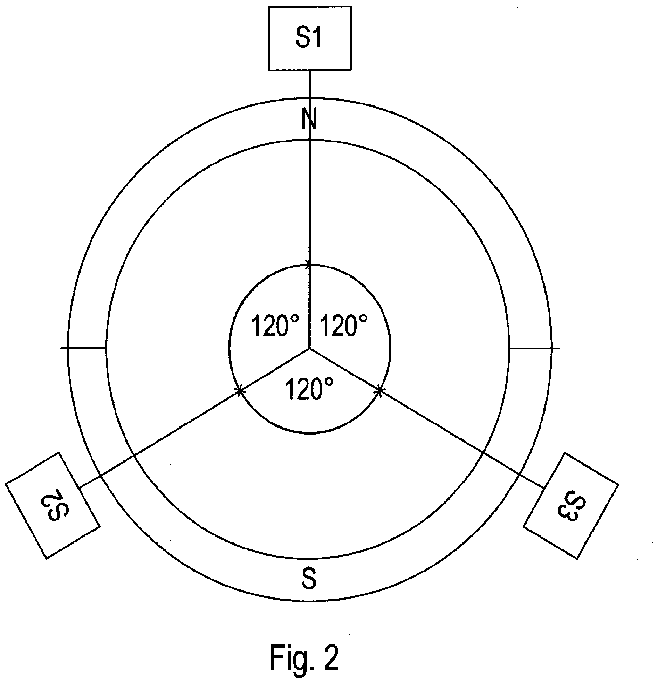

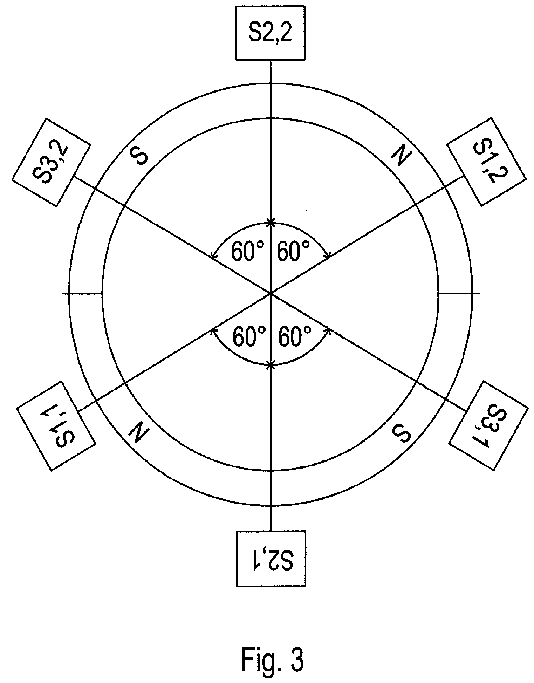

Stationär in der Anordnung angeordnet ist eine Sensoranordnung 2, welche nach Figur 2 eine einzige Gruppe von Sensoren und nach Figur 3 zwei Gruppen von Sensoren aufweist.

Die Maßverkörperung ist nach Figur 2 als Dauermagnet ausgeführt, welcher einen Nordpol und einen Südpol aufweist. Nach Figur 3 sind vier Pole vorhanden, also in Umfangsrichtung aufeinander folgend ein Nordpol, ein Südpol, ein Nordpol und ein Südpol.

Die Sensoren sind beispielsweise als Hallsensoren ausführbar oder als magnetoresistive Sensoren.

Die Sensoren einer jeweiligen Gruppe sind elektrisch um 120° beabstandet. In Figur 2 sind die drei Sensoren regelmäßig voneinander am Umfang beabstandet, also mit 120° zum jeweils in Umfangsrichtung nächstbenachbarten Sensor.

Die Pole des Dauermagnets sind in Umfangsrichtung ebenfalls regelmäßig voneinander beabstandet. Dabei weist das bewegbar angeordnete Teil 2p Pole auf. In Figur 2 ist p= 1, in Figur 2 ist p= 2.

Aus den drei zueinander um elektrisch um 120° versetzt ausgeführten Sensorsignalen wird mittels einer Clarke-Transformation ein Dreiertupel von Signalen bestimmt, wobei ein erstes und ein zweites Signal die Winkellage des Teils eineindeutig abbilden und ein drittes Signal im Idealfall Null ergibt. Dabei sind das erste Signal und das zweite Signal um nur 90° zueinander versetzt.

Das erste Signal ist bei gleichmäßiger Bewegung des Teils, insbesondere bei gleichmäßiger Drehbewegung, im Idealfall beispielsweise ein Sinussignal und das zweite Signal ein Cosinussignal.

Das dritte Signal entspricht dem dritten Teil der Summe der drei Sensorsignale. Bei gleichmäßiger Bewegung des Teils ist dann im Idealfall das dritte Signal konstant Null, weist also einen verschwindenden Wert unabhängig von der Position, insbesondere Winkellage, auf.

Wie in Figur 1 gezeigt, werden dann die Signale, insbesondere das erste und das zweite Signal, einem Korrekturverfahren 4 unterworfen. Die korrigierten Signale werden dann zur Bestimmung der Position, insbesondere Winkellage, verwendet. Hierzu wird bei drehbar angeordnetem Teil ein Arcustangens aus dem Quotienten des ersten und zweiten Signals bestimmt.

Wie in Figur 2 dargestellt, sind drei Sensoren stationär angeordnet und in Umfangsrichtung regelmäßig, also mit jeweils 120° zum in Umfangsrichtung nächstkommenden Sensor, beabstandet.

Das Teil ist drehbar um eine Drehachse angeordnet. Die Sensoren erzeugen das erste Sensorsignal S1, das zweite Sensorsignal S2 und das dritte Sensorsignal S3, wobei jeder der Sensoren jeweils auf demselben Radialabstand zur Drehachse des Teils angeordnet ist.

Das Teil weist einen Dauermagneten auf, welcher quer zur Drehachse magnetisiert ist. Somit ist am Umfang des Teils in Umfangsrichtung ein magnetischer Nordpol gefolgt von einem magnetischen Südpol. Dabei überdecken der Nordpol und der Südpol denselben einen gleich großen Umfangswinkelbereich, also jeweils 180°.

Die Sensoren bilden somit eine Gruppe, deren drei Sensorsignale um jeweils 120° zueinander versetzt sind.

Das erste Signal wird als 2/3 * S1 - 1/3 * S2 - 1/3 * S3 gebildet, das zweite Signal wird als 1/SQRT (3) * S2 - 1/SQRT (3) * S3 gebildet, das dritte Signal wird als 1/3 * S1 + 1/3 * S2 + 1/3 * S3 gebildet.

Somit wird aus den drei Sensorsignalen ein erstes Signal gebildet, das elektrisch um 90° versetzt ist zum zweiten Signal. Das dritte Signal im Idealfall konstant Null.

Oberwellen der Ordnung 3 * n * p werden aufgehoben und führen somit nicht zu Fehlern bei der Positionsbestimmung, also Winkelbestimmung.

Wenn als Störungsquelle eine zeitlich veränderliche, auf jeden der Sensoren wirkende Gleichkomponente auftritt, bewirkt diese, dass das dritte Signal nicht mehr einen verschwindenden Wert annimmt. Hingegen sind das erste und zweite Signal davon unberührt.

Erstes und zweites Signal weisen keinen nicht verschwindenden Mittelwert auf.

Das dritte Signal enthält keine Information über die Änderung der Winkellage.

Die Bestimmung der Position, insbesondere Winkellage, erfolgt mittels einer analogen oder digitalen Rechnereinheit, beispielsweise FPGA oder Mikroprozessor.

Wie in Figur 3 dargestellt, ist im Unterschied zu Figur 2 nicht nur eine erste Gruppe von Sensoren vorhanden, welche die Sensorsignale S1_1, S2_1 und S3_1 erzeugen, sondern eine weitere Gruppe von Sensoren, welche die Sensorsignale S1_2, S2_2 und S3_2 erzeugen. Somit ist das oben geschilderte Verfahren für jede einzelne Gruppe ausführbar. Insbesondere ist das mittels der Clarke Transformation bestimmte Tupel einerseits bestimmbar aus den Sensorsignalen der ersten Gruppe und andererseits ist ein ebensolches Tupel aus den Sensorsignalen der zweiten Gruppe bestimmbar. Danach ist der Mittelwert der beiden Tupel berechenbar, insbesondere also der Mittelwert der beiden bestimmten ersten Signale der Mittelwert der beiden bestimmten zweiten Signale und als Drittes Signal der Mittelwert der beiden bestimmten dritten Signale.

Am beweglichen Teil sind zwei Polpaare vorhanden, wobei jeder Pol 90° in Umfangsrichtung überdeckt, also jedes Polpaar 180°.

Alternativ ist der Mittelwert auch schon vor der Clarketransformation bestimmbar und somit dann die Transformation auf die Mittelwerte anwendbar.

Bei weiteren erfindungsgemäßen Ausführungsbeispielen sind weitere Gruppen von Sensoren verwendbar, wobei wiederum die jeweiligen durch Clarke Transformieren bestimmten Signale gemittelt werden und darauf wiederum das Korrekturverfahren 4 und die Bestimmung 5 angewendet wird

Alternativ ist der Mittelwert aber auch schon vor der Clarketransformation bestimmbar und somit dann die Transformation auf die Mittelwerte anwendbar.

Bei weiteren erfindungsgemäßen Ausführungsbeispielen sind zwei Gruppen mit jeweils drei Sensoren vorgesehen, wobei diese in Bewegungsrichtung, insbesondere bei linearer Ausführung, also linear beweglichem Teil, mit 180° miteinander beabstandet sind.

Bei weiteren erfindungsgemäßen Ausführungsbeispielen sind drei Gruppen mit jeweils drei Sensoren vorgesehen, wobei diese in Bewegungsrichtung, insbesondere bei linearer oder bei rotativer Ausführung, mit 120° voneinander beabstandet sind. Die Maßverkörperung weist dann vorteiligerweise 2^q + 2^q/2 Polpaare auf, wobei q eine natürliche Zahl ist.

Bei weiteren erfindungsgemäßen Ausführungsbeispielen sind vier Gruppen mit jeweils drei Sensoren vorhanden, wobei die Sensoren einen Versatz von jeweils 90° am Umfang aufweisen. Die Maßverkörperung weist dann vorteiligerweise 2^q Polpaare auf, wobei q eine natürliche Zahl ist.

Bei weiteren erfindungsgemäßen Ausführungsbeispielen ist das Teil linear beweglich angeordnet. Dabei sind die Sensoren einer jeweiligen Gruppe elektrisch um ganzzahlige Vielfache von 120° voneinander beabstandet. Somit ist der erste Sensor bei 0° positioniert, der zweite Sensor bei 120° + m*360° und der dritte Sensor bei 240° + n *360°, wobei m und n ganze Zahlen sind. Dabei ist wichtig das das bewegbare Teil derart lang ausgeführt ist, dass die an ihm angeordneten Pole, insbesondere also in Bewegungsrichtung alle Polpaare einen Bereich überdecken, welcher auch die drei Sensoren überdeckt.

Die Pole sind dabei hintereinander gleichmäßig beabstandet angeordnet und dabei abwechselnd magnetisiert. Auf einen Nordpol folgt also in Bewegungsrichtung ein Südpol und umgekehrt.

### Bezugszeichenliste

1 Maßverkörperung
2 Sensoranordnung
3 Transformation
4 Korrekturverfahren
5 Bestimmung der Winkellage

## Patentansprüche

1. Verfahren zur Bestimmung der Position, insbesondere Winkellage, eines relativ zu einer oder mehrerer Gruppen von Sensoren bewegbar, insbesondere rotatorisch oder linear bewegbar angeordneten, Teils,
wobei das Teil eine Maßverkörperung aufweist, welche von den Sensoren erfassbar ist,
**wobei** mittels einer Transformation aus den von den Sensoren erzeugten Sensorsignalen zwei Signale erzeugt werden,
welche zueinander 90° phasenverschoben sind,
wobei die Position des Teils aus den Signalen bestimmt wird,
**wobei die Maßverkörperung durch Pole von einem oder mehreren Dauermagneten realisiert ist,**
**die Signale vor der Bestimmung der Position mittels eines Korrekturverfahrens korrigiert werden**
**dadurch gekennzeichnet, dass**
**bei der Transformation als drittes Signal die durch die Anzahl der Sensorsignale geteilte Summe der Sensorsignale bestimmt wird,**
**wobei aus dem Verlauf des dritten Signals ein Störsignal bestimmt wird, welches bei dem Korrekturverfahren zum Korrigieren der Signale verwendet wird,**
**wobei zur Bestimmung der Position der Arcustangens oder Arkuscotangens des Quotienten aus dem ersten und dem zweiten Signal bestimmt wird.,**
**wobei die Transformation eine Clarke-Transformation ist,**
**wobei die Gruppe derart ausgestaltet ist, dass drei Sensorsignale erzeugt werden.**

2. Verfahren nach Anspruch 1,
die Sensoren einer jeweiligen Gruppe in Bewegungsrichtung regelmäßig voneinander beabstandet sind.

3. Anordnung, **die dazu eingerichtet ist, ein Verfahren nach mindestens einem der vorangegangenen Ansprüche durchzuführen,**
**wobei die Anordnung ein Teil aufweist, das drehbar gelagert ist und das** in Umfangsrichtung jeweils gleich lange magnetische Pole mit jeweils zum nächstbenachbarten Pol umgekehrter Magnetisierung aufweist,
**wobei die Anordnung eine oder mehrere Gruppen von Sensoren aufweist, wobei die eine oder mehrere Gruppen von Sensoren stationär an einem Umfang des Teils angeordnet ist oder sind,**
insbesondere wobei die Magnetisierungsrichtung in radialer oder entgegen der radialen Richtung ausgerichtet ist.

## Claims

1. A method of determining the position, in particular angular position, of a part which is movably arranged relative to one or a plurality of groups of sensors, in particular which is movably arranged in a rotational or linear manner,
wherein the part has a material measure which can be detected by the sensors,
wherein by means of a transformation, two signals are generated from the sensor signals generated by the sensors, which two signals are 90° phase-shifted in relation to one another,
wherein the position of the part is determined from the signals,
wherein the material measure is realised by poles of one or a plurality of permanent magnets, the signals are corrected by means of a correction procedure before determination of the position
**characterised in that**
the sum of the sensor signals, divided by the number of the sensor signals, is determined as a third signal upon transformation,
wherein an interference signal is determined from the course of the third signal, which interference signal is used to correct the signals during the correction procedure,
wherein for determination of the position, the arc tangent or arc cotangent of the quotient is determined from the first and the second signal,
wherein the transformation is a Clarke transformation,
wherein the group is such that three sensor signals are generated.

2. A method according to claim 1,
the sensors of a respective group are regularly spaced apart from one another in a direction of motion.

3. An arrangement which is configured to carry out a method according to at least one of the preceding claims,
wherein the arrangement has a part which is rotatably mounted and which in a circumferential direction has magnetic poles which are of the same length in each case and which in each case have opposite magnetisation to the next-adjacent pole,
wherein the arrangement has one or a plurality of groups of sensors, wherein the one or a plurality of groups of sensors is or are stationarily arranged at a circumference of the part,
in particular wherein the magnetisation direction is oriented in a radial direction or counter to the radial direction.

## Revendications

1. Procédé de détermination de l'emplacement, en particulier de la position angulaire d'une pièce douée de mobilité, notamment de mobilité rotatoire ou linéaire par rapport à un ou plusieurs groupe(s) de capteurs,
ladite pièce présentant une mesure matérialisée pouvant être détectée par les capteurs, sachant que deux signaux, déphasés l'un de l'autre de 90°, sont engendrés au moyen d'une transformation à partir des signaux engendrés par lesdits capteurs,
l'emplacement de la pièce étant alors déterminé sur la base desdits signaux,
ladite mesure matérialisée étant concrétisée par des pôles d'un ou plusieurs aimant(s) permanent(s),
les signaux étant corrigés préalablement à la détermination dudit emplacement, au moyen d'un procédé de correction,
**caractérisé par le fait que**
la somme des signaux des capteurs, divisée par le nombre desdits signaux des capteurs, est déterminée en tant que troisième signal au stade de la transformation,
sachant qu'un signal perturbateur, utilisé pour corriger les signaux dans le procédé de correction, est déterminé sur la base de l'allure dudit troisième signal,
sachant que l'arc tangente ou l'arc cotangente du quotient des premier et deuxième signaux est déterminé en vue de la détermination de l'emplacement,
ladite transformation étant une transformation de Clarke,
le groupe étant conçu de façon telle que trois signaux de capteurs soient engendrés.

2. Procédé selon la revendication 1,
les capteurs d'un groupe considéré étant mutuellement espacés d'intervalles réguliers dans la direction du mouvement.

3. Agencement conçu pour la mise en œuvre d'un procédé conforme à au moins l'une des revendications précédentes,
lequel agencement comprend une pièce montée à rotation et comportant à chaque fois, dans la direction périphérique, des pôles magnétiques présentant des longueurs identiques et une magnétisation respectivement inverse de celle du pôle le plus rapproché,
l'agencement étant pourvu d'un ou plusieurs groupe(s) de capteurs, ledit groupe, ou lesdits multiples groupes de capteurs étant implanté(s) de manière fixe sur une périphérie de ladite pièce,
sachant, en particulier, que la direction de la magnétisation est orientée dans la direction radiale, ou en sens inverse de ladite direction radiale.
